# EUROPEAN PATENT SPECIFICATION

(11) **EP 3 575 953 B1**
(45) Date of publication and mention of the grant of the patent: **14.04.2021**
(21) Application number: 18175370.8
(22) Date of filing: 31.05.2018
(51) Int. Cl.: G06F 8/65, G06F 21/57, H04L 9/32, H04L 29/06, G06F 21/53, G06F 21/64, H04L 29/08

(54) **A BLOCKCHAIN NETWORK AGENT FOR VERIFYING AND ACCEPTING PATCH REQUESTS FROM A PATCH INITIATOR AND METHOD THEREOF**
BLOCKKETTEN-NETZWERKAGENT ZUR ÜBERPRÜFUNG UND ANNAHME VON PATCH-ANFRAGEN VON EINEM PATCH-INITIATOR UND VERFAHREN DAFÜR
AGENT DE RÉSEAU À CHAINE DE BLOCS POUR VÉRIFIER ET ACCEPTER LES DEMANDES DE PATCHS D'UN INITIATEUR DE PATCHS ET PROCÉDÉ CORRESPONDANT

(43) Date of publication of application: 04.12.2019
(73) Proprietor: Nokia Solutions and Networks Oy, 02610 Espoo (FI)
(72) Inventor: PONTECORVI, Matteo, 91620 Nozay (FR); SIGNORINI, Matteo, 91620 Nozay (FR); FOERSTER, Thomas, 81377 Munich (DE); KOK, Jan, 81245 Munich (DE); OLIVER, Ian, 01150 Söderkulla (FI)
(74) Representative: Novagraaf Technologies

(56) References cited:
- EP-A1- 1 327 191
- US-A1- 2006 080 656
- US-A1- 2017 031 676
- US-A1- 2018 088 928

## Description

### TECHNICAL FIELD

This disclosure relates generally to blockchain network agent, and more specifically, but not exclusively, to a blockchain network agent which verifies and accepts patch requests from a patch initiator ("PI").

### BACKGROUND

Currently, network devices use certification authorities to verify patch integrity, however, there are no other agents that use a blockchain-based solution to validate the integrity of a network element after a new patch (or a set of new patches) has been applied to the network element. Document US 2018/088928 discloses a distributed ledger used to store software updates made in programmable devices of a computer network ensuring, in particular, that no duplicate updates are made.

### SUMMARY

A brief summary of various example embodiments is presented. Some simplifications and omissions may be made in the following summary, which is intended to highlight and introduce some aspects of the various example embodiments, but not to limit the scope of the invention.

Detailed descriptions of example embodiments adequate to allow those of ordinary skill in the art to make and use the inventive concepts will follow in later sections.

Various embodiments relate to a method for verifying and accepting a patch request from a patch initiator, the method including the steps of receiving, by an agent in a network element, the patch request from the patch initiator, determining, by the agent, with a blockchain network peer, whether the patch request is included in the plurality of patch requests being accepted by the blockchain network peer, determining, by the agent, whether the patch request is next in an order specified by the blockchain network peer, and applying the patch of the patch request to the network element if the patch request is accepted by the blockchain network peer and is next in the order specified by the blockchain network peer.

In an embodiment of the present disclosure, the method further comprises the steps of determining, by the agent, a status of a network element, and determining, by the blockchain network peer, whether dependencies of the patch of the patch request are satisfied based on the status of the network element.

In an embodiment of the present disclosure, the method further comprises the step of aborting, by the agent, the patch request when the patch request is not next in the order specified by the blockchain network peer or when the patch request is not accepted by the blockchain network peer.

In an embodiment of the present disclosure, the method further comprises the step of computing, by the agent, a patch report which is transmitted to the blockchain network peer.

In an embodiment of the present disclosure, the agent interacts with a hardware security module to compute the patch report.

In an embodiment of the present disclosure, the hardware security module is a trusted platform module.

In an embodiment of the present disclosure, the hardware security module is located on the network element.

In an embodiment of the present disclosure, when the agent interacts with the hardware security module, the hardware security module transmits to the agent a set of hash values which correspond to components within the network element.

In an embodiment of the present disclosure, the set of hash values represent integrity certificates which are included within the resulting patch report and compared against expected hash values in the blockchain network peer.

Various embodiments relate to an agent in a network element for verifying and accepting a patch request from a patch initiator, the agent being configured to receive the patch request from the patch initiator, determine whether the patch request is included in a plurality of patch requests being accepted by a blockchain network peer, determine whether the patch request is next in an order specified by the blockchain network peer, and apply the patch of the patch request to the network element if the patch request is accepted by the blockchain network peer and is next in the order specified by the blockchain network peer.

In an embodiment of the present disclosure, the agent is further configured to abort the patch request when the patch request is not next in the order specified by the blockchain network peer or when the patch request is not accepted by the blockchain network peer.

In an embodiment of the present disclosure, the agent is further configured to receive a request from an auditor to perform an audit of the network element being monitored.

In an embodiment of the present disclosure, the agent is further configured to compute a patch report which is transmitted to the blockchain network peer.

In an embodiment of the present disclosure, the agent interacts with a hardware security module to compute the patch report.

In an embodiment of the present disclosure, the hardware security module is a trusted platform module.

In an embodiment of the present disclosure, the hardware security module is located on a network element.

In an embodiment of the present disclosure, when the agent interacts with the hardware security module, the hardware security module transmits a set of hash values which correspond to components within the network element.

In an embodiment of the present disclosure, the set of hash values represent integrity certificates which are included within the resulting patch report and compared against expected hash values in the blockchain network peeh The invention is disclosed in the appended claims.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate example embodiments of concepts found in the claims, and explain various principles and advantages of those embodiments.

These and other more detailed and specific features are more fully disclosed in the following specification, reference being added to the accompanying drawings, in which:
FIG. 1 illustrates a block diagram of the blockchain network ("BN") of the current embodiment;
FIG. 2 illustrates a block diagram of the BN architecture and communication of the BN of the current embodiment;
FIG. 3 illustrates a block diagram of the network element architecture of the current embodiment;
FIG. 4 illustrates a block diagram of a basic trusted platform module ("TPM") bus of the current embodiment, and
FIG. 5 illustrates a block diagram of a TPM stack of the current embodiment.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. Descriptors such as "first," "second," "third," etc., are not meant to limit the order of elements discussed, are used to distinguish one element from the next, and are generally interchangeable.

The current embodiment is directed towards how a blockchain network communicates with and executes commands/tasks at network elements in order to maintain security requirements at those network elements (e.g., Internet of Things ("IoT") devices) by the means of an agent. The security aspect of the current embodiment relates to the tracking of the integrity of the IoT (hardware/firmware/software, depending on the needs and capabilities of the IoT devices, and the power of a malicious attacker).

The current embodiment describes a local agent to address multi-vendor and legacy equipment being present in the network domain. The agent initiates and performs analytics/forensics and remediation, after detection of an event.

The agent protocol stack may include three major functional areas including monitoring, analysis and remediation. A management system is in charge of maintaining control of analysis/forensics and remediation in line with network operator's needs and responsibilities.

Network devices heavily rely on roots of trust such as certification authorities ("CAs") for update processes. Due to the fact that they rely on these CAs, the network devices largely accept payloads which are sent to them with the only condition of acceptance that the payload is signed by a known and trusted sender, which is determined from the CAs.

Network devices using CAs may be beneficial in a centralized and well managed system; however, it may be difficult to keep the integrity of distributed network devices by only relying on the secure communication channel itself, especially when the update process can be triggered by different entities, including a third party with the intention to manipulate or hijack the device, and where several or all of the different entities are not synchronized.

The difficulty in the above example is compounded by the increase in the amount and variations and/or versions of network devices that may exist, for example, in the IoT space.

In the disclosure, the terms IoT or IoE are used interchangeably with "network device" or "device" or "element". It is noted that embodiments described herein may be applied other network environments as well.

The agent is a software element that resides within a network device (i.e., it is local to the network device). The agent may communicate with different entities in the network, including patch initiators which are configured to receive the update for a network device.

The agent must communicate with the blockchain network to validate and verify the correctness and the resulting status of the patches initiated and received from the patch initiator.

The agent may further communicate with an auditor, which may be part of the blockchain network which performs cyclic routine checks performed by the agent. The agent may validate and verify the correctness of the audit request performed. For example, if no audit request is reported by the ledger to be a valid audit request, the agent may not perform the audit request and may raise the alarm. The blockchain network ledger is the trusted source for any change (e.g., patch, update, recovery and audit).

The auditor may request latest status reports from the network device about the monitored assets, as determined by the agent. If expected and reported status reports are deferred, an alarm is raised and further actions may be initiated (e.g., by a Security Operation, Analytics and Response ("SOAR") management system).

Indirectly with a SOAR enabled management system, which may perform analytics and forensics routines and initiate remediation in order to react to a possible mismatch of expected versus observed integrity (i.e., determining a breach of integrity), the agent may validate and verify the correctness of the remediation request performed.

By using this integrity tracking approach, the agent detects malicious or potentially dangerous patch requests and prevents the network element from being misaligned with the blockchain network. A malicious or potentially dangerous patch request may be defined as a request that is either not following the blockchain network patch order or is not present within the blockchain network.

The agent further detects and reacts to malicious or unexpected changes, which may have been applied to the network element, which may alter the integrity of the network element. Any update to either software or hardware components of the network element is compared to the actual status within the blockchain network and if they do not match, then an event has occurred after the last time the network element had been patched and a rollback process must be started.

The agent may further gather and provide analytics and/or forensics data by the blockchain network to the SOAR enabled management system to enable countermeasures (e.g., block or reroute traffic) and remediation (e.g., re-boot or re-image).

The agent may then be able to verify each patch request and apply it to the network device, if the request has been globally verified (i.e., written within the blockchain network) without requiring any external trusted third party and in case of a mismatch, the agent may provide a status report on the network element under supervision, in order to support the analytics task of an overlooking SOAR system.

The agent may also support rollback actions, for example, re-imaging or re-configuring the network element, making it aligned to the blockchain network and be configured to receive new patches.

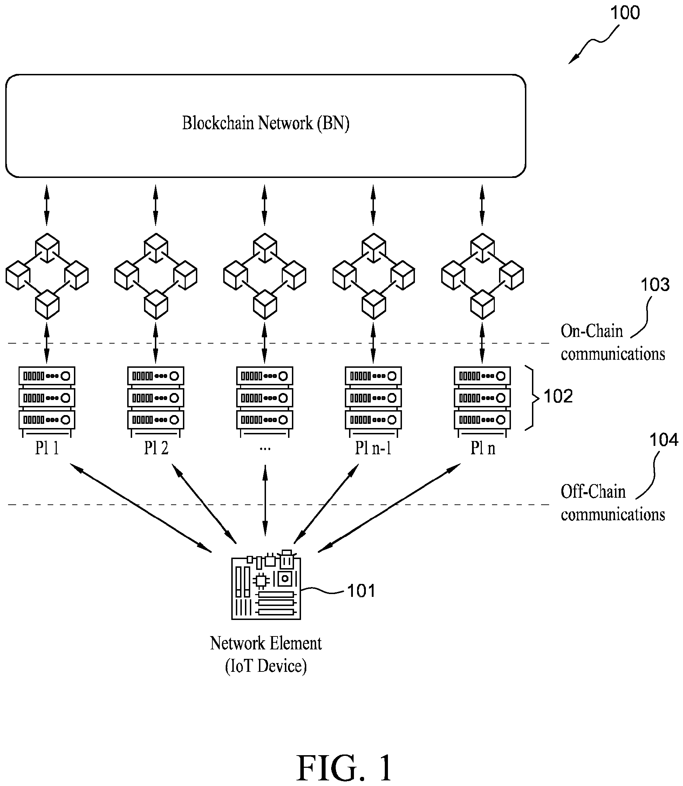

FIG. 1 illustrates a block diagram of the blockchain network 100 of the current embodiment.

The agent runs within a network element 101 and the agent is responsible for verifying and accepting patch requests coming from the patch initiators 102.

The current embodiment addresses the issue that different patch initiators 101 may belong to different vendors or may be malicious, therefore, not aligned to the actual status represented by the blockchain network 100.

To ensure the integrity of the network elements 101, patch requests ("PReqs") may only be accepted in the exact order which they have been validated and written within the blockchain network 100.

On-chain requests 103 which are verified and agreed upon by the blockchain network 100 infrastructure, need to be locally verified by the network element 101. Off-chain requests 104 are not verified and agreed upon by the blockchain network 100 infrastructure.

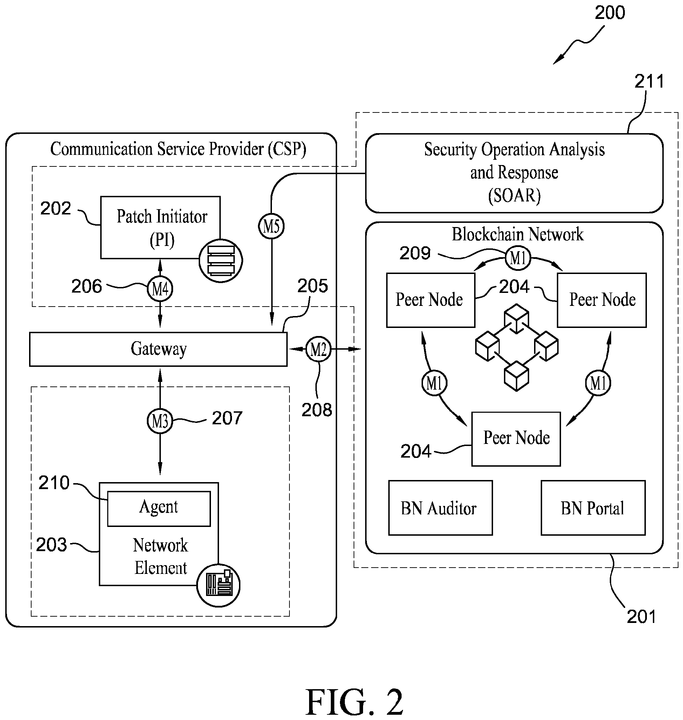

FIG. 2 illustrates a block diagram of the blockchain network architecture 200 and communication of the blockchain network 201 of the current embodiment.

All the messages sent from patch initiators 202, network devices 203, blockchain network peers 204, and elements within the SOAR 211 are passed through a gateway 205. The gateway 205 may not implement any logic in the path creation, validation or report but the gateway may be required to establish a secure connection between the other elements.

A patch initiator 202 sends patch requests off-chain to network elements by message M4 206 and message M3 207. The patch initiator 202 also sends patch requests to blockchain network peers 204 by message M4 206 and message M2 208.

The blockchain network peers 204 may execute the blockchain mining protocol to decide their orders with message M1 209 and write them to the blockchain.

However, message M2 208 and message M3 207 may differ, if the patch initiator 202 is malicious or different in the order in which they have been sent out.

Furthermore, as there are many different patch initiators 202 and each of them may be controlled by a different vendor, and therefore are not synchronized, the order in which network elements 203 apply the patches might not be the same in which the latter have been sent by the patch initiators 202. Therefore, it is important that network elements 203 verify the patch order within the blockchain network 201 before the network elements 203 execute any command from the patch initiators 202.

Running these checks directly within the network elements 203 is insufficient as the network elements 203 may be owned and controlled by customers and provided by various vendors, which is the reason the agent 210 is a specific component in the blockchain network architecture 200.

The patch initiator 202 content is not part of the blockchain network 201 or the agent 210, nor does the blockchain network 201 or the agent 210 have responsibility to monitor and verify the patch initiator 202 content. The ledger is aware of a valid change request, and the resulting integrity of the monitored assets is represented by hashes. The agent 210 reports to the blockchain network 201 after comparing the resulting hashes after the change with the hashes stored within the blockchain network 201.

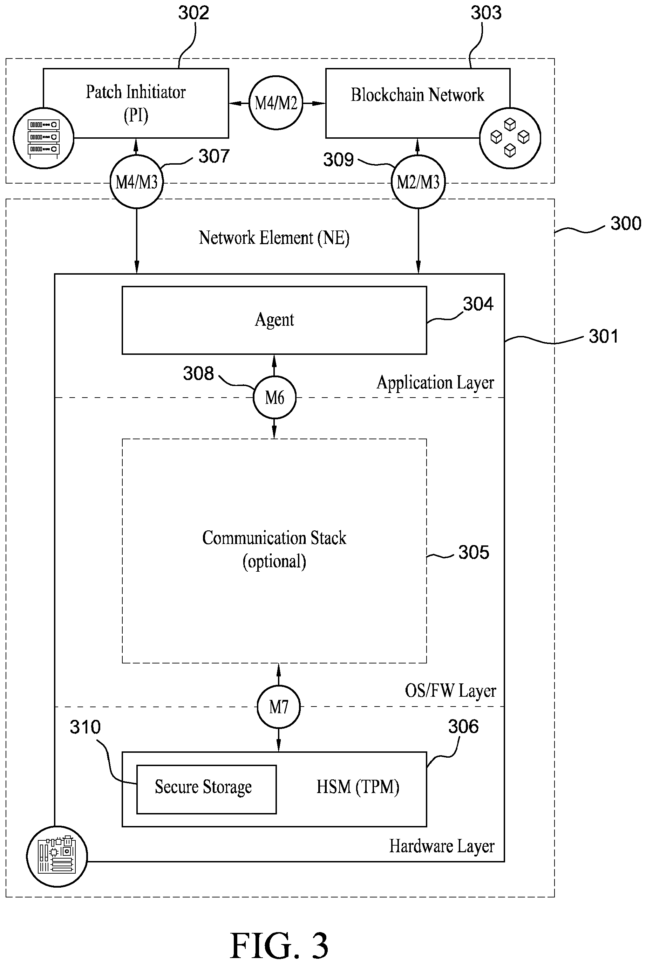

FIG. 3 illustrates a block diagram of the network element architecture 300 of the current embodiment. FIG. 3 also includes the patch initiator 302 and the blockchain network 303.

The agent's software component 304 is configured to receive messages from patch initiators 302 and access the information contained in the blockchain network 303. The agent's software component 304 may also perform the comparison of the expected hash resulting from changes made at the network element 300 and validate the request of change to be an authorized change.

The network element's communication stack 305 is optional and may include an operating system which may be responsible for all the network elements 301 operations. The communication stack 305 may give the agent 304 access to a hardware security module 306 which includes a secure storage 310.

The device firmware, which is included in the network element's BIOS memory may be used when a network element 301 is not able to load an operating system.

The network element's hardware security module ("HSM") 306 may be used to encrypt and sign all the network element 301 messages that need to be identified by either patch initiators 302 or the gateway of the blockchain network peers 303.

As shown in FIG. 3, the agent 304 receives, by messages M4+M3 307, a new patch request from the patch initiator 302.

Based on the patch request, the agent 304 within the network element 301 interacts with the operating system/firmware 305 of the network element 301 by message M6 308 to derive all information on the latest status of the network element 300. For example, this may be accomplished for example by a command md5sum (a command in the TPM framework) if the agent 304 needs to know the latest snapshot of assets under supervision (e.g., some configuration files).

Using messages M2+M3 309, the agent 304 communicates with the blockchain network peers 303 to determine what are the latest patch requests accepted by blockchain network 303. If the patch request is among the latest patch requests, then the agent 304 determines if the patch request is the next patch that has to be applied.

As patches rely on software dependencies, it is important that the order agreed by the blockchain network peers 303 is maintained. Once it is verified that the patch request is the next patch to be applied, the agent 304 determines if the dependencies or prerequisites of that patch are satisfied by the latest status of the network element, as computed above.

If so, the patch request is then aborted if it is not the next one in order within the blockchain sequence, or it may be aborted if it was not requested and an alarm is raised and further action is required by SOAR.

When the protocol does not abort and the patch is applied, the agent 304 then computes the patch report, containing the fingerprints of the resulting hashes after applying validated changes that must be sent to the blockchain network peers 303 for the patch process to be finally validated and completed. If this is not completed, an alarm is raised.

The agent interacts with the operating system/firmware 305 by message M6 308. However, the agent 304 may also interact with a hardware security module 306, if any, such as trusted platform modules (TPMs). This interaction serves to guarantee the patch integrity and device authenticity.

The interaction between the HSM 306 (e.g., TPMs) and the agent 304 guarantees the security and integrity of the agent 304 and the entirety of the network element 301 being monitored.

When the HSM 306 is queried by the agent 304, it may provide a set of hashes corresponding to different components of the monitored device (e.g., BIOS, agent, files, etc.). These hashes represent the integrity certificates that will be included within the patch report and verified against the expected values contained in the blockchain network 303.

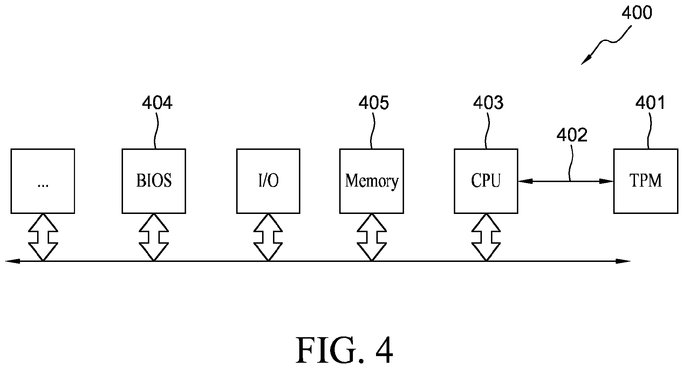

The HSM 306 may be a TPM and FIG. 4 illustrates a block diagram of bus connection including a basic TPM 400 of the current embodiment.

A basic trust stack based upon a physically present TPM device 401 is used.

The TPM device 401 may be implemented via a specific bus 402 attached to the CPU 403. The TPM device 401 may be a physically discrete TPM, an integrated TPM on a chip or a firmware TPM (i.e., fTPM). The interface and physical properties of the TPM device 401 are specified by the Trusted Computing Group and are implementation independent.

Additional models of operation may allow additional communication to BIOS 404, BIOS memory 405 which are made using the CPU 403 which are the vehicle for access and not directly from the TPM device 401. This may include secure on-chip memory, BIOS memory access, hard coded (firmware based) accredited code modules for DRTM, etc.

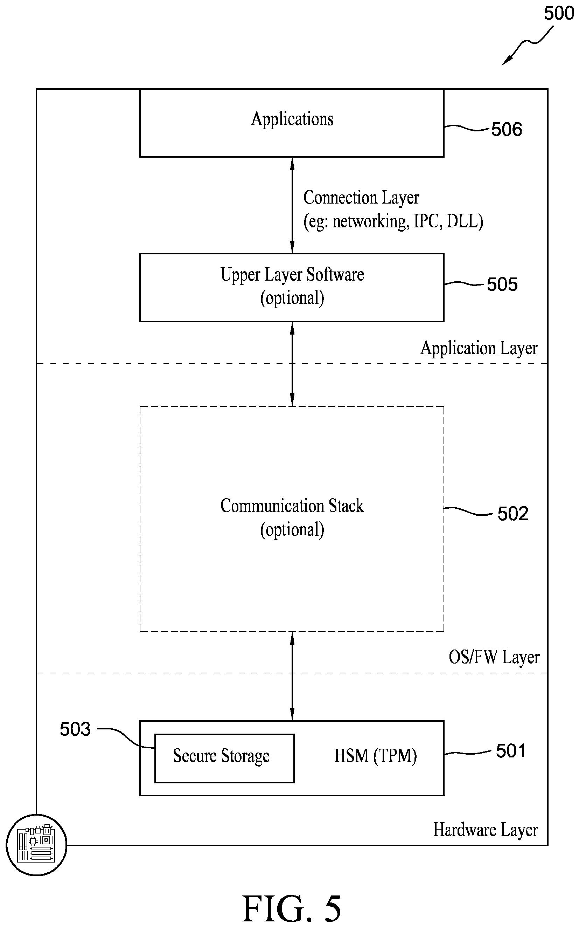

FIG. 5 illustrates a general block diagram of a TPM stack 500 of the system for verifying and accepting patch requests for a patch initiator.

The communication stack 502 may be implemented in several ways. For example, the communication stack 502 may be implemented using the open source Intel TSS/ABRMD/TPM2_Tools stack, or the Infineon's EFTT stack, which is lighter.

In another embodiment, the communication stack 502 may be removed and the agent may be permitted to communicate directly with the TPM 501.

System integrity is achieved by measuring components (e.g., BIOS, boot loader, kernel, etc.) at boot time and in some cases dynamically at run-time using a solution such as Linux IMA and SELinux.

A TPM 501 stores the measurements in a bank of registers known as PCRs. These PCRs may be read natively without security.

However, this method provides no security. In order to read the PCRs such that no tampering can take place, it is necessary to quote the TPM 501.

A quote is a signed hash of a given set of PCRs. The signing is made internally inside the TPM 501 by a private key. While any private key can be used it is best to use an attestation key derived from the TPM's 501 own endorsement key which itself is unique to each TPM 501.

This process may be described by booting the machine and taking measurements, obtaining TPM EK public key, generating TPM AK public key, checking TPM AK is verifiable from the EK, and generating a TPM_QUOTE or TPM2_QUOTE using the given AK key for a given set of registers, hashing algorithm and any necessary passwords.

The quote contains a hash of the given PCR set and a signature of the quote signed by the private AK key and thus verifiable by the AK public key. There exists a certificate chain back to the TPM's EK guaranteeing that the quote was generated by the given TPM 501.

The quote additionally may contain other information such as reset counts, restart counts, firmware version, clock values, etc.

It should be apparent from the foregoing description that various exemplary embodiments of the invention may be implemented in hardware. Furthermore, various exemplary embodiments may be implemented as instructions stored on a non-transitory machine-readable storage medium, such as a volatile or non-volatile memory, which may be read and executed by at least one processor to perform the operations described in detail herein. A non-transitory machine-readable storage medium may include any mechanism for storing information in a form readable by a machine, such as a personal or laptop computer, a server, or other computing device. Thus, a non-transitory machine-readable storage medium may include read-only memory (ROM), random-access memory (RAM), magnetic disk storage media, optical storage media, flash-memory devices, and similar storage media and excludes transitory signals.

It should be appreciated by those skilled in the art that any blocks and block diagrams herein represent conceptual views of illustrative circuitry embodying the principles of the invention. Implementation of particular blocks can vary while they can be implemented in the hardware or software domain without limiting the scope of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Accordingly, it is to be understood that the above description is intended to be illustrative and not restrictive. Many embodiments and applications other than the examples provided would be apparent upon reading the above description. The scope should be determined, not with reference to the above description or Abstract below, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method for verifying and accepting a patch request from a patch initiator, the method comprising the steps of:
receiving, by an agent in a network element, the patch request from the patch initiator;
determining, by the agent, with a blockchain network peer, whether the patch request is included in a plurality of patch requests being accepted by the blockchain network peer;
determining, by the agent, whether the patch request is next in an order specified by the blockchain network peer, and applying, by the agent, the patch of the patch request to the network element if the patch request is accepted by the blockchain network peer and is next in the order specified by the blockchain network peer.

2. The method according to claim 1, further comprising the steps of:
determining, by the agent, a status of the network element:
determining, by the blockchain network peer, whether dependencies of the patch of the patch request are satisfied based on the status of the network element.

3. The method according to claim 1 or claim 2, further comprising the step of:
aborting, by the agent, the patch request when the patch request is not next in the order specified by the blockchain network peer or when the patch request is not accepted by the blockchain network peer.

4. The method according to any one of claims 1 to 3, further comprising the step of:
computing, by the agent, a patch report which is transmitted to the blockchain network peer.

5. The method according to claim 4, wherein the agent interacts with a hardware security module to compute the patch report.

6. The method according to claim 5, wherein the hardware security module is a trusted platform module.

7. The method according to claim 5 or claim 6, wherein the hardware security module is located on the network element.

8. The method according to any one of claims 5 to 7, wherein when the agent interacts with the hardware security module, the hardware security module transmits to the agent a set of hash values which correspond to components within the network element.

9. The method according to claim 8, wherein the set of hash values represent integrity certificates which are included within the resulting patch report and compared against expected hash values in the blockchain network peer.

10. An agent applicable to a network element for verifying and accepting a patch request from a patch initiator, the agent being configured to:
receive the patch request from the patch initiator;
determine whether the patch request is included in a plurality of patch requests being accepted by a blockchain network peer;
determine whether the patch request is next in an order specified by the blockchain network peer, and
apply the patch of the patch request to the network element if the patch request is accepted by the blockchain network peer and is next in the order specified by the blockchain network peer.

11. The agent of claim 10, being further configured to:
abort the patch request when the patch request is not next in the order specified by the blockchain network peer or when the patch request is not accepted by the blockchain network peer.

12. The agent according to claim 10 or claim 11, being further configured to:
receive a request from an auditor to perform an audit of the network element being monitored.

13. The agent according to claim 10, being further configured to:
compute a patch report which is transmitted to the blockchain network peer.

14. The agent according to claim 13, wherein the agent interacts with a hardware security module to compute the patch report.

15. The agent according to claim 14, wherein the hardware security module is a trusted platform module.

## Patentansprüche

1. Verfahren zum Verifizieren und Akzeptieren einer Patchanforderung von einem Patchinitiator, wobei das Verfahren die folgenden Schritte umfasst:
Empfangen der Patchanforderung durch einen Agenten in einem Netzwerkelement vom Patchinitiator;
Bestimmen durch den Agenten mit einem Blockkettennetzwerkspeer, ob die Patchanforderung in einer Vielzahl von Patchanforderungen, die vom Blockkettennetzwerkspeer akzeptiert werden, beinhaltet ist;
Bestimmen durch den Agenten, ob die Patchanforderung in einer Reihenfolge, die vom Blockkettennetzwerkspeer festgelegt ist, die nächste ist, und
Anwenden des Patch der Patchanforderung durch den Agenten auf das Netzwerkelement, wenn die Patchanforderung vom Blockkettennetzwerkspeer akzeptiert wird und in der Reihenfolge, die vom Blockkettennetzwerkspeer festgelegt ist, die nächste ist.

2. Verfahren nach Anspruch 1, das ferner die folgenden Schritte umfasst:
Bestimmen eines Status des Netzwerkelements durch den Agenten;
Bestimmen durch den Blockkettennetzwerkspeer, ob Abhängigkeiten des Patch der Patchanforderung auf Basis des Status des Netzwerkelements erfüllt sind.

3. Verfahren nach Anspruch 1 oder Anspruch 2, das ferner den folgenden Schritt umfasst:
Abbrechen des Patch durch den Agenten, wenn die Patchanforderung in der Reihenfolge, die vom Blockkettennetzwerkspeer festgelegt ist, nicht die nächste ist oder wenn die Patchanforderung vom Blockkettennetzwerkspeer nicht akzeptiert wird.

4. Verfahren nach einem der Ansprüche 1 bis 3, das ferner den folgenden Schritt umfasst:
Berechnen eines Patchberichts, der zum Blockkettennetzwerkspeer übertragen wird, durch den Agenten.

5. Verfahren nach Anspruch 4, wobei der Agent mit einem Hardwaresicherheitsmodul interagiert, um den Patchbericht zu berechnen.

6. Verfahren nach Anspruch 5, wobei das Hardwaresicherheitsmodul ein vertrauenswürdiges Plattformmodul ist.

7. Verfahren nach Anspruch 5 oder Anspruch 6, wobei sich das Hardwaresicherheitsmodul im Netzwerkelement befindet.

8. Verfahren nach einem der Ansprüche 5 bis 7, wobei, wenn der Agent mit dem Hardwaresicherheitsmodul interagiert, das Hardwaresicherheitsmodul einen Satz von Hashwerten, die Komponenten im Netzwerkelement entsprechen, zum Agenten überträgt.

9. Verfahren nach Anspruch 8, wobei der Satz von Hashwerten Integritätszertifikate repräsentieren, die im resultierenden Patchbericht beinhaltet sind und mit erwarteten Hashwerten im Blockkettennetzwerkspeer verglichen werden.

10. Agent, der auf ein Netzwerkelement anwendbar ist, zum Verifizieren und Akzeptieren einer Patchanforderung von einem Patchinitiator, wobei der Agent zu Folgendem ausgelegt ist:
Empfangen der Patchanforderung vom Patchinitiator;
Bestimmen, ob die Patchanforderung in einer Vielzahl von Patchanforderungen, die von einem Blockkettennetzwerkspeer akzeptiert werden, beinhaltet ist;
Bestimmen, ob die Patchanforderung in einer Reihenfolge, die vom Blockkettennetzwerkspeer festgelegt ist, die nächste ist, und
Anwenden des Patch der Patchanforderung auf das Netzwerkelement, wenn die Patchanforderung vom Blockkettennetzwerkspeer akzeptiert wird und in der Reihenfolge, die vom Blockkettennetzwerkspeer festgelegt ist, die nächste ist.

11. Agent nach Anspruch 10, der ferner zu Folgendem ausgelegt ist:
Abbrechen des Patch, wenn die Patchanforderung in der Reihenfolge, die vom Blockkettennetzwerkspeer festgelegt ist, nicht die nächste ist oder wenn die Patchanforderung vom Blockkettennetzwerkspeer nicht akzeptiert wird.

12. Agent nach Anspruch 10 oder Anspruch 11, der ferner zu Folgendem ausgelegt ist:
Empfangen einer Anforderung von einem Auditor zum Durchführen eines Audits des Netzwerkelements, das überwacht wird.

13. Agent nach Anspruch 10, der ferner zu Folgendem ausgelegt ist:
Berechnen eines Patchberichts, der zum Blockkettennetzwerkspeer übertragen wird.

14. Agent nach Anspruch 13, wobei der Agent mit einem Hardwaresicherheitsmodul interagiert, um den Patchbericht zu berechnen.

15. Agent nach Anspruch 14, wobei das Hardwaresicherheitsmodul ein vertrauenswürdiges Plattformmodul ist.

## Revendications

1. Procédé pour vérifier et accepter une demande de patch en provenance d'un initiateur de patch, le procédé comprenant les étapes consistant à :
recevoir, par un agent dans un élément de réseau, la demande de patch en provenance de l'initiateur de patch ;
déterminer, par l'agent, avec un pair de réseau de chaîne de blocs, si la demande de patch est incluse dans une pluralité de demandes de patch qui sont acceptées par le pair de réseau de chaîne de blocs ;
déterminer, par l'agent, si la demande de patch est la suivante dans un ordre spécifié par le pair de réseau de chaîne de blocs, et
appliquer, par l'agent, le patch de la demande de patch à l'élément de réseau si la demande de patch est acceptée par le pair de réseau de chaîne de blocs et est la suivante dans l'ordre spécifié par le pair de réseau de chaîne de blocs.

2. Procédé selon la revendication 1, comprenant en outre les étapes consistant à :
déterminer, par l'agent, un statut de l'élément de réseau ;
déterminer, par le pair de réseau de chaîne de blocs, si des dépendances du patch de la demande de patch sont satisfaites sur la base du statut de l'élément de réseau.

3. Procédé selon la revendication 1 ou la revendication 2, comprenant en outre l'étape consistant à :
abandonner, par l'agent, la demande de patch lorsque la demande de patch n'est pas la suivante dans l'ordre spécifié par le pair de réseau de chaîne de blocs ou lorsque la demande de patch n'est pas acceptée par le pair de réseau de chaîne de blocs.

4. Procédé selon l'une quelconque des revendications 1 à 3, comprenant en outre l'étape consistant à :
calculer, par l'agent, un rapport de patch qui est transmis au pair de réseau de chaîne de blocs.

5. Procédé selon la revendication 4, dans lequel l'agent interagit avec un module de sécurité matériel pour calculer le rapport de patch.

6. Procédé selon la revendication 5, dans lequel le module de sécurité matériel est un module de plate-forme de confiance.

7. Procédé selon la revendication 5 ou la revendication 6, dans lequel le module de sécurité matériel est situé sur l'élément de réseau.

8. Procédé selon l'une quelconque des revendications 5 à 7, dans lequel lorsque l'agent interagit avec le module de sécurité matériel, le module de sécurité matériel transmet à l'agent un ensemble de valeurs de hachage qui correspondent à des composants dans l'élément de réseau.

9. Procédé selon la revendication 8, dans lequel l'ensemble de valeurs de hachage représentent des certificats d'intégrité qui sont inclus dans le rapport de patch résultant et comparés à des valeurs de hachage attendues dans le pair de réseau de chaîne de blocs.

10. Agent applicable à un élément de réseau pour vérifier et accepter une demande de patch en provenance d'un initiateur de patch, l'agent étant configuré pour :
recevoir la demande de patch en provenance de l'initiateur du patch ;
déterminer si la demande de patch est incluse dans une pluralité de demandes de patch qui sont acceptées par un pair de réseau de chaîne de blocs ;
déterminer si la demande de patch est la suivante dans un ordre spécifié par le pair de réseau de chaîne de blocs, et
appliquer le patch de la demande de patch à l'élément de réseau si la demande de patch est acceptée par le pair de réseau de chaîne de blocs et est la suivante dans l'ordre spécifié par le pair de réseau de chaîne de blocs.

11. Agent selon la revendication 10, étant en outre configuré pour :
abandonner la demande de patch lorsque la demande de patch n'est pas la suivante dans l'ordre spécifié par le pair de réseau de chaîne de blocs ou lorsque la demande de patch n'est pas acceptée par le pair de réseau de chaîne de blocs.

12. Agent selon la revendication 10 ou la revendication 11, étant en outre configuré pour :
recevoir une demande en provenance d'un auditeur pour effectuer un audit de l'élément de réseau qui est surveillé.

13. Agent selon la revendication 10, étant en outre configuré pour :
calculer un rapport de patch qui est transmis au pair de réseau de chaîne de blocs.

14. Agent selon la revendication 13, dans lequel l'agent interagit avec un module de sécurité matériel pour calculer le rapport de patch.

15. Agent selon la revendication 14, dans lequel le module de sécurité matériel est un module de plate-forme de confiance.
